# EUROPEAN PATENT APPLICATION

(11) **EP 3 502 999 A1**
(43) Date of publication of application: **26.06.2019**
(21) Application number: 17210236.0
(22) Date of filing: 22.12.2017
(51) Int. Cl.: G06Q 20/40

(54) **FLEXIBLE EMV-COMPLIANT IDENTIFICATION TRANSACTION METHOD**

(71) Applicant: MasterCard International Incorporated, Purchase NY New York 10577-2509 (US)
(72) Inventor: Rice, Enda, 1970 Wezembeek-Oppem (BE); Hay, Florent, 1020 Laeken (BE)
(74) Representative: Murgitroyd & Company

(57) **Abstract**

Identification protocols, such as those developed by EMVCo LLC, ensure worldwide interoperability between POI terminals and chip-based payment applications and devices. These standardized data interactions are very limited, and make the implementation of new functionalities very difficult, and it takes years before the standards are agreed and implemented.

An identification transaction method comprising: commencing, by a POI terminal, an EMV-compliant identification transaction with an identification devices; receiving, by the POI terminal, an indication from the identification device that the device may participate in non-EMV compliant identification transactions; responding by either: (a) continuing the EMV-compliant identification transaction with the identification devices if the indication is negative or no indication is received; or (b) commencing and continuing a non-EMV compliant identification transaction with the identification devices if the indication is positive.

By implementing such a function selection, new non-EMV compliant functionalities may be quickly added to existing proprietary kernels. By quickly providing new functionalities, the migration to improved ID devices may be accelerated.

## Description

### FIELD

The present disclosure generally relates to identification transaction methods initiated by EMV-compliant Points of Interaction (POI) terminals.

### BACKGROUND

Electronic authorisation systems for payment transactions use identification protocols, such as those developed by EMVCo LLC which are publicly available at https://www.emvco.com/document-search. They ensure worldwide interoperability between POI terminals and chip-based payment applications and devices.

There are EMV Specifications based on contact chip, contactless chip, common payment application (CPA), card personalisation, and tokenization.

EMVCo has standardized a set of Application Protocol Data Units (APDUs) intended for exchange between contact & contactless chips and POI terminals. These APDUs are based on the ISO 7816 protocol and support the exchange of application level data between chip and POI terminal. The EMV implementation of these APDU's are documented, for example, in the EMV Contact Specification, version 4.3, currently publicly available at: legacy.emvco.com/specifications.aspx?id=223 and the EMV Contactless Specification, version 2.6, currently publicly available at:

### http://legacy.emvco.com/specifications.aspx?id=21.

For example, the EMV Contact Specifications version 4.3 includes:
- Book 1: "Application Independent ICC to Terminal Interface Requirements";
- Book 2: Security and Key Management;
- Book 3: Application Specification; and
- Book 4: Cardholder, Attendant, and Acquirer Interface Requirements.

For example, the EMV Contactless Specifications version 2.6 includes:
- Book A: Architecture and General Requirements;
- Book B: Entry Point;
- Books C: Kernel Specifications; and
- Book D: Contactless Communication Protocol.

The APDU's and the interactions between chips and POI terminals are based on ISO 7816, which includes ISO 7816-4: "Identification cards -- Integrated circuit cards -- Part 4: Organization, security and commands for interchange", which is currently at Edition 3, and was published in April 2013. It is currently publicly available at: https://www.iso.org/standard/54550.htm.

During recent years, chip-based payment has been changing from mainly physical, like a chipcard, to mainly virtual, such as a software application on a mobile device. Although such mobile devices (equipped with large screens, digital keyboards, fingerprint/iris scanner, etc.) are very powerful compared to a conventional chip card, the data interactions with the POI terminal must still be compliant with the EMV specifications and standards. These standardized data interactions are very limited, and make the implementation of new functionalities very difficult. Although these standards are regularly updated, it takes years before the standards are agreed and implemented.

It is an object of the invention to provide additional data interaction functionalities within the limitations of the current EMV specifications.

### GENERAL STATEMENTS

According to a first aspect of the present disclosure, there is provided an identification transaction method comprising: providing a POI terminal comprising a processor, the processor being programmed to execute identification transactions with identification devices by interaction in accordance with a standard EMV payment transaction process; commencing, by the POI terminal, an EMV-compliant identification transaction with one of the identification devices; receiving, by the POI terminal, an indication from said one of the identification devices that the device may participate in non-EMV compliant identification transactions with the terminal; responding to said indication by either: (a) continuing, by the POI terminal, the EMV-compliant identification transaction with said one of the identification devices if the indication is negative or no indication is received; or (b) commencing and continuing, by the POI terminal, a non-EMV compliant identification transaction with said one of the identification devices if the indication is positive.

By implementing such a function selection, new non-EMV compliant functionalities may be quickly added to existing proprietary kernels. By quickly providing new functionalities, the migration to improved ID devices may be accelerated.

According to a second aspect of the current disclosure, the processor may be further programmed to provide a wrapper function, configured and arranged to execute only one or more EMV-compliant identification transactions with said one of the identification devices if the indication is negative or no indication is received; and to execute one or more EMV-compliant identification transactions and additionally one or more non-EMV compliant identification transactions with said one of the identification devices if the indication is positive.

Non-EMV compliant functionalities are combined with legacy functionality of EMV 1st Generation. The legacy commands and responses - APDUs such as GPO, READ REC, Gen AC - are encapsulated in the WRAPPER command and response. The legacy functionality is not impacted and remain unchanged.

The non-EMV compliant functionalities - such as session management, PAUSE/RESUME, switch interface, redeem coupons - is added to the existing legacy functionality using an extra layer of logic.

In addition, the one or more EMV-compliant identification transactions may also be ISO7816-compliant. This may provide an even higher degree of interoperability.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate exemplary embodiments, and which are not necessarily drawn to scale, wherein:
FIG. 1 depicts a typical identification transaction;
FIG. 2 depicts an identification transaction using additional interaction channels;
FIG. 3 depicts an improved identification transaction compliant with the EMV specifications;
FIG. 4 depicts an overview of the improved state machine;
FIG. 5 depicts an improved ID transaction using an improved POI;
FIG. 6 depicts an ID transaction between a standard POI terminal and an improved ID device;
FIG. 7 depicts a further improved ID transaction using an improved POI;
FIG. 8 depicts a still further improved ID transaction using an improved POI; and
FIG. 9 depicts another improved ID transaction using an improved POI.

### DETAILED DESCRIPTION

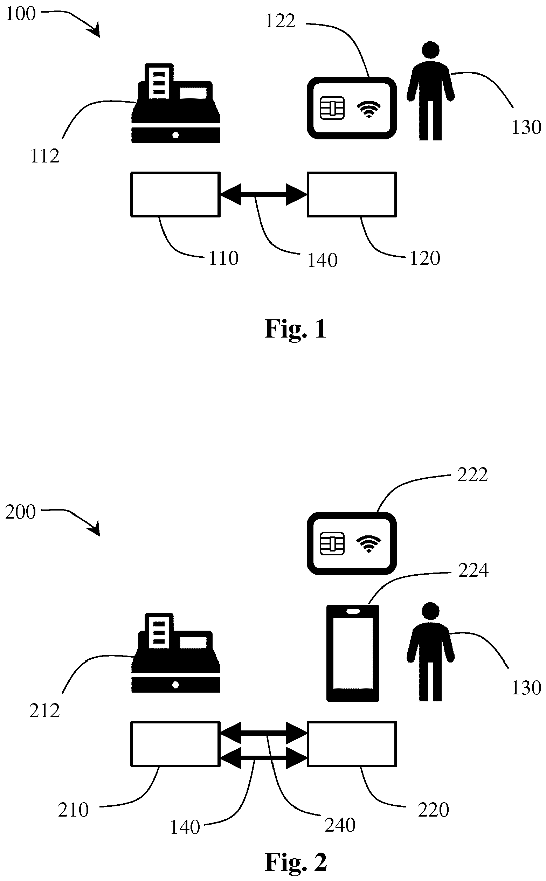

A typical identification transaction (or "ID transaction") 100 is shown in FIG.1 - a consumer 130 wishing to make a payment transaction may carry an identification device 120 (or "ID device"). In general, payment transactions comprise an initial ID transaction 100, after which an authorization transaction may also occur. An authentication transaction may also be initiated to further prove the identity of the consumer 130, although in many cases, possession of the ID device 120 is sufficient.

To initiate the ID transaction 100, a POI terminal 110 is provided comprising a processor, the processor being programmed to execute ID transactions 100 with one or more ID devices 120. In most cases, it is advantageous to support a plurality of types of ID devices 120 to maximize convenience for consumers 130, for example, both contact and contactless ID devices 120 are typically supported at a POI terminal 110 which may be implemented in any convenient combination of hardware and software to provide interoperability with the ID devices 120 supported - for example, it is frequently comprised as an element of a POS (Point of Sale) system 112 and/or an ATM. Depending on the types of ID devices 120 supported, one or more interaction channels 140 may be provided to transfer data between the POI terminal 110 and the ID device 120 - these may use, for example, electrical contact, close coupling, electromagnetic radiation, visible or non-visible light, radio-frequency or any suitable combinations.

During the ID transaction 100, the POI terminal 110 typically first establishes whether the ID device 120 is a supported type. If so, it establishes whether the ID device 120 may be used for additional transactions such as an authentication transaction, an authorization transaction, a coupon-redeeming transaction, a payment transaction, a bidding transaction, a quoting transaction, a negotiation transaction, or any suitable combinations.

In the case of a contact chipcard 122, the POI terminal 110 may comprise a suitable contact card reader, utilizing electrical contact or close coupling as the channel 140 for the interaction. To support both contact and contactless chipcards 122, the POI terminal 110 processor is programmed to be EMV compliant. The chip card 122 also comprises a processor, which is also programmed to be EMV-compliant.

ID devices 120 may be physical, like a chipcard, or virtual, such as a software application on a mobile device. In combination with interaction technology such as NFC or Bluetooth, a mobile device, such as mobile phone, can be used as a virtual ID device 120 to initiate contactless ID transactions 100 and to interact with merchant POI terminals 110. Such applications include Apple Pay, Android Pay, X Pay and Samsung Pay. These standardized data interactions are very limited - the ID device 120 limits itself to operation as a chipcard to ensure the largest degree of interoperability.

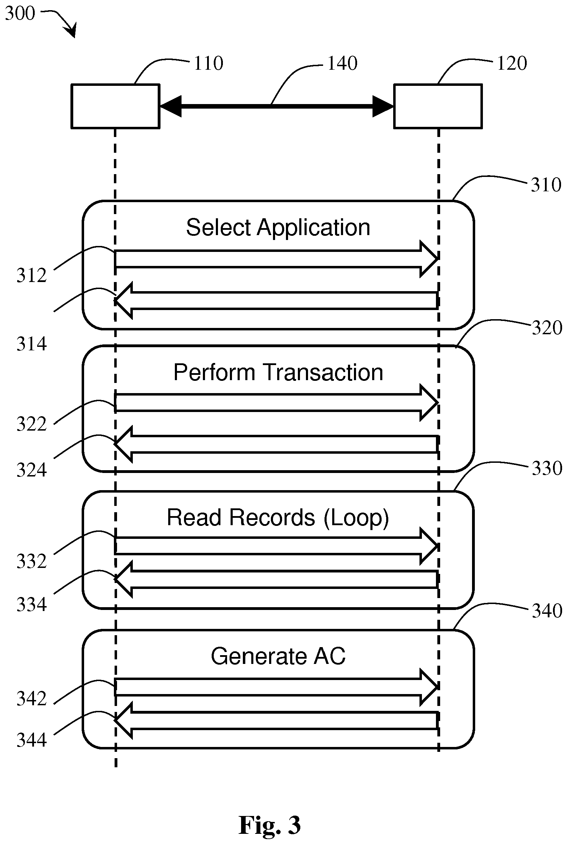

FIG. 3 depicts an improved ID transaction 300 compliant with the EMV standard.

A POI terminal 110 is provided which supports interoperability with an ID device 120 using a suitable interaction channel 140. For example, a contact chipcard 122 is inserted into a chipcard reader using electrical contact.

Data exchanges between ID device 120 and POI terminal 110 are initiated using a Master-Slave protocol defined by the EMV specifications, where the POI terminal 110 acts as the Master, and the ID device 120 as the Slave. Commands are coded in bytes with a header to identify the command composed of Class byte, Instruction byte, P1 parameter byte and P2 parameter byte. The ID device 120 typically responds with a response payload, or byte array, accompanied by a Status Word of two bytes. In some cases, only a Status Word may be returned. The Status Word has the value '9000' if the command has been successfully processed by the ID device 120 and a different value if an error occurs during processing in the ID device 120.

This ID transaction 300 proceeds as follows using the Application Protocol Data Units (APDU) as described in EMV specifications. The POI terminal 110 sends Command APDU's (C-APDU) as Master to the ID device 120. The ID device 120 responds with Response APDU's (R-APDU) as Slave to the POI terminal 110.

Initially, the Application is selected 310 - the POI terminal 110 interrogates the ID device 120 to see if it is a supported type, for example by sending the Mastercard Application Identifier 312. In this case, the ID device 120 responds with the OK response '9000'. The transaction is then initiated 320 by the POI terminal 110 sending a request for the processing options 322, to which the ID device 120 responds with the file & record structure to be retrieved 324. The POI terminal 110 then reads all the indicated records 330 by sending a request for the record 332, to which the ID device 120 responds with the contents of that record 334. This is continued, or looped, until all the indicated records have been read. Finally, this part of the data exchange is ended 340 by the POI terminal 110 requesting the Application Cryptogram be generated 342, followed by the ID device 120 responding with the Application Cryptogram 344:

**310 Select Application**

| | |
|---|---|
| 312 | Select C-APDU(Mastercard AID) |
| 314 | Select R-APDU(SW12= '9000') |

**320 Initiate Transaction**

| | |
|---|---|
| 322 | GetProcessingOptions C-APDU() |
| 324 | GetProcessingOptions R-APDU(file/record structure) |

**330 Read Records (Loop)**

| | |
|---|---|
| 332 | ReadRecord C-APDU(FileID/RecordID) |
| 334 | ReadRecord R-APDU(RecordContent) |

**340 Generate AC**

| | |
|---|---|
| 342 | GenerateAC C-APDU(TerminalInputData) |
| 344 | GenerateAC R-APDU(ApplicationCryptogram) |

Some basic card functionality may be indicated in the response 324, for example, the kind of offline data authentication that is supported.

Further data exchange may occur between the POI terminal 110 and the ID device 120, and further identification transactions may be performed.

Within the EMV specifications, it is not practical for the ID device 120 to indicate to the POI terminal 110 that it wants to initiate a certain action. Transactions are driven by the POI Terminal 110 sending the ID device 120 a command, and receiving a response from the ID device 120. This standardization of the protocols therefore limits, and in some cases even prevents, the implementation of new functionality which virtual ID devices 120 and mobile devices may provide. For example:
- the ID device 120 initiating a data exchange not based on a POI terminal 110 command;
- the ID device 120 may wish to pause the transaction to ask for consumer 130 input, such as selecting a payment card to be used;
- authenticating the owner of the ID device 120, for example the card holder, using a PIN entered on the mobile device or a biometric sensor present in the mobile device;
- selecting coupons to be redeemed prior to execution of a payment transaction.

A possible solution for this problem is to re-program POI terminal 110 worldwide with new functionality. In practice, this would take many years to achieve widescale interoperability, with unpredictable results, as in some cases both hardware and software must be upgraded and/or replaced.

In addition, the EMV specifications for contactless payment allows proprietary APDU's to be used when a recognized ID device 120 is used. For example, an issuer of payment authorization, such as Mastercard, may include APDU's only for use with ID devices 120 that they have issued, or authorized. Additional functionality may be provided within these proprietary APDU's, but it should not interfere with the standard functionality, and any functionality provided by the proprietary APDU's of other issuers.

FIG.2 depicts a further ID transaction 200. An improved POI 210 (or "improved POI") is provided comprising a processor, the processor being programmed to execute ID transactions 100 with one or more ID devices 120 using the standard interaction channels 140 according to the EMV specifications as described above with reference to FIG 1. It is further programmed to execute ID transactions 200 with one or more improved ID devices 220 using the standard interaction channels 140 and/or additional interaction channels 240.

The consumer 130 wishing to make a payment transaction may carry an improved ID device 220, having functionalities not supported in the EMV specifications.

The ID devices may also be comprised in an integrated circuit, a bio-sensor, a medical implant, a contacted card, a portable electronic device, a SIM module, a mobile computer, a remote server, or any combination thereof. The improved ID device 220 may be wholly or partially virtual. It may also be a combination of software and/or hardware comprised in a mobile device 224.

Optionally, the improved ID device 220 may also provide functionality which is compliant with the EMV specifications, to maximize convenience for the consumer 130. In practice, ID devices 220 are preferred which always support EMV-compliant transactions.

Depending on the types of improved ID devices 220 supported, the additional interaction channels 240 may be, for example, electrical contact, close coupling, electromagnetic radiation, visible or non-visible light, radio-frequency or any suitable combinations.

During the further ID transaction 200, the improved POI 210 first establishes whether the improved ID device 220 is a supported type. If so, it establishes whether the further ID device 220 supports:
- only transactions compliant with the EMV specifications (or "EMV-compliant transactions"), or
- transactions not compliant with EMV specifications (or "non-EMV compliant transactions"), or
- both EMV-compliant and non-EMV compliant transactions.

EMV-compliant transactions are those that are documented and supported by the current versions of the EMV specifications. The current EMV specifications may also be referred to as EMV 1st Generation or legacy functionality.

Non- EMV compliant transactions are those that are not documented or not supported by the current versions of the EMV specifications. Also considered non-compliant are those transactions which may be possible, but for which the chances of success are low. These transactions enhance the EMV-compliant transactions.

The improved POI 210 is configured and arranged to receive an indication from an improved ID device 220 that the device may participate in non-EMV compliant ID transactions with the improved POI 210. For example, this may be arranged using a standard interaction channel 140 or an additional interaction channel 240. For example, user interaction, electrical contact, close coupling, electromagnetic radiation, visible or non-visible light. If no indication is received by the improved POI 210, then only compliant ID transactions will be initiated through a standard interaction channel 140.

If the improved ID device 220 is comprised in a mobile device 224, a software application may be used to provide the indication using a radio-frequency to the improved POI 210.

This indication for participation may be provided in the response to a SELECT command communicated by the improved POI 210.

It is also possible to provide the indication using data transactions compliant with the EMV specifications by using a wrapper function, such as a WRAPPER Command Message using the EMV-compliant Command APDU Format:

| Code | Value |
|---|---|
| CLA | '80' |
| INS | 'C2' |
| P1 | '00' |
| P2 | '00' |
| Lc | '02' - 'FF' |
| Data | Protocol Header (mandatory), Protocol Data (optional), Application Layer Data (optional) |
| Le | '00' |

The WRAPPER command is only used if it has been already indicated, for example using a SELECT command & response, that the non-EMV compliant functionality is supported. This WRAPPER command encapsulates EMV 1^{st} Generation APDUs - this provides this non-EMV compliant capability using the current 1^{st} Generation Kernel.

The structure of the Command and Response APDUs remains compliant, but the coding and meaning of the WRAPPER command and response are proprietary. Therefore, a CLA (Class) byte of '80' is used, and the command may be included with the issuer proprietary APDU's. The WRAPPER command is the EMV-compliant Case 4 Command, allowing both command and response data.

Both command and response data carry protocol level signaling and link control data, along with Application Layer Data:

**WRAPPER Command**

| Command Header | Protocol Header | Protocol Data | Application Layer Data: | Le |
|---|---|---|---|---|
| CLA-INS-P1-P2-LC | | | | |
| | | | Legacy C-APDU | |
| | | | CLA-INS-P1-P2-LC - Command Data - Le | |

The signaling and data block chaining is added by the protocol layer of the sender and decoded by the protocol layer of the receiver. This is used to control the flow of data at the protocol level. The application level data is simply communicated from the improved POI 220 to the improved ID device 210 or vice versa. The protocol layer does not read or manipulate this data, so the improved ID device 210 and the improved POI 220 may exchange requests and responses independently of the compliant data interactions, allowing compliant ID transactions 100 with both standard ID devices 120 and improved ID devices 220.

Non-EMV compliant functionalities are combined with legacy functionality of EMV 1st Generation. The legacy commands and responses - APDUs such as GPO, READ REC, Gen AC - are encapsulated in the WRAPPER command and response. The legacy functionality is not impacted and remain unchanged.

The current EMV specifications, with its limitations, is also referred to as EMV 1st Generation. By implementing such a wrapper function, new non-EMV compliant functionalities may be quickly added to existing proprietary kernels. By quickly providing new functionalities, the migration to improved ID devices 220 may be accelerated compared with the expected deployment via the EMV Next Generation Initiative, also called the 2^{nd} Generation Specification.

As the WRAPPER command is used to carry legacy APDU, the kernel may still run its current processing flow, managing its current state machine. This means that the impact on the current kernel is minimized. On top of this processing, a higher-level processing is added to manage POI-ID device signaling information in the Protocol Header and Protocol Data fields.

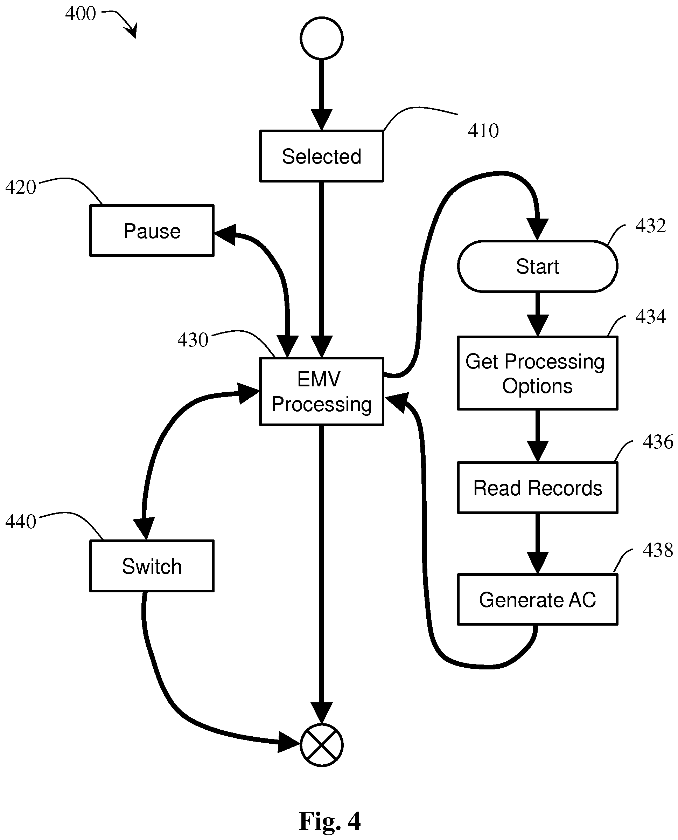

FIG 4 depicts an overview 400 of an improved state machine, accommodating both EMV-compliant and non-EMV compliant functionality. After the application is selected 410, EMV-compliant processing 430 occurs. EMV-compliant states are available:
- after starting 432 or initiating a transaction, the POI terminal 110 gets the processing options 434 from the ID device 120;
- the POI terminal then reads the indicated records 436, and ends this part of the data exchange by generating 438 an Application Cryptogram (AC).

In addition, non-EMV compliant states are also available, for example:
- the EMV kernel may pause 420 - this could be used when waiting for the consumer 130 to provide input relevant to the transaction;
- the EMV kernel processing may exit, following the decision to switch 440 to a different interaction channel.

This state diagram 400 may be extended with more use cases and non-EMV compliant functionality.

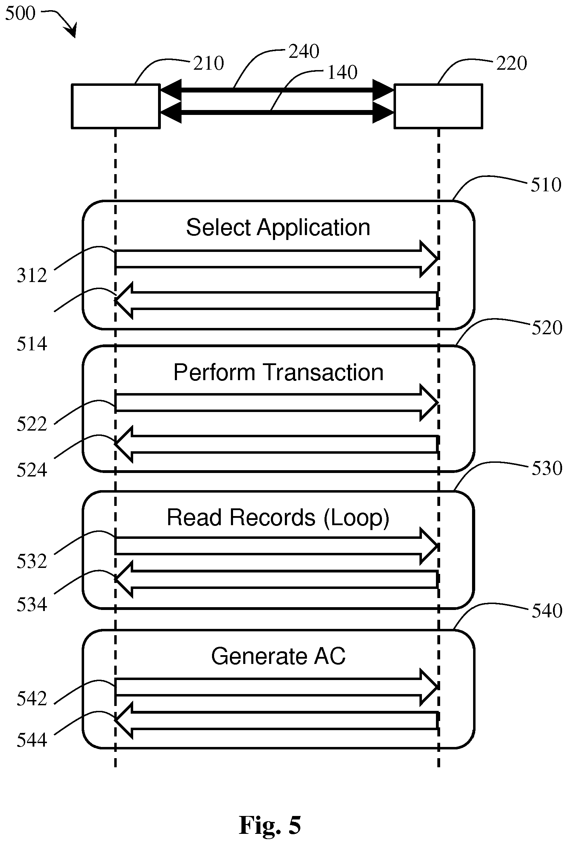

FIG. 5 depicts an improved ID transaction 500 using the improved POI 210 which supports interoperability with the improved ID device 220 using the standard interaction channels 140 and/or additional interaction channels 240 as described for FIG. 2.

First, the Application is selected 510 - the improved POI 210 sends the Mastercard Application Identifier 312 to the improved ID device 220 in the same way as described for FIG. 3.

However, in this improved transaction 500 the improved ID device 220 responds with a modified OK response 514 which indicates that non-EMV compliant transactions are supported. This may be implemented, for example, by overloading the SELECT R-APDU response with a data object identified with a proprietary BER-TLV tag to indicate that "non-EMV compliant transactions are supported" by the improved ID device 220. This data object is then followed by the SW1-SW2 status word fields indicating OK with '9000'.

As the improved POI 210 also supports non-EMV compliant transactions, the processor is programmed to initiate subsequent data transactions using the WRAPPER function after the interoperability of the improved ID device 220 is detected.

The transaction is then initiated 520 by the improved POI 210 sending a request, using the WRAPPER command, for the processing options 522, to which the improved ID device 220 responds (using the response) with the file & record structure to be retrieved 524. The improved POI 210 then reads all the indicated records 530 by sending a request for the record 532, to which the improved ID device 220 responds with the contents of that record 534. This is continued, or looped, until all the indicated records have been read. Finally, this data exchange is ended 540 by the improved POI 210 requesting the Application Cryptogram be generated 542, followed by the ID device 120 responding with the Application Cryptogram 544:

**510 Select Application**

| | |
|---|---|
| 312 | Select C-APDU(Mastercard AID) |
| 514 | Select R-APDU(non-EMV compliant transactions supported, SW12 = '9000') |

**520 Initiate Transaction using WRAPPER command**

| | |
|---|---|
| 522 | WRAPPER C-APDU [GetProcessingOptions C-APDU] |
| 524 | WRAPPER R-APDU [GetProcessingOptions R-APDU (file/record structure)] |

**530 Read Records (Loop) using WRAPPER command**

| | |
|---|---|
| 532 | WRAPPER C-APDU [ReadRecord C-APDU (FileID/RecordID)] |
| 534 | WRAPPER C-APDU [ReadRecord R-APDU (Record Content)] |

**540 Generate AC using WRAPPER command**

| | |
|---|---|
| 542 | WRAPPER C-APDU [GenerateAC C-APDU (TerminalInputData)] |
| 544 | WRAPPER R-APDU [GenerateAC R-APDU (ApplicationCrytogram)] |

The implementation of the WRAPPER function is configured to manage the identification transactions when either the POI terminal or the ID device does not support, or decides not to use, the non-EMV compliant transaction functionality.

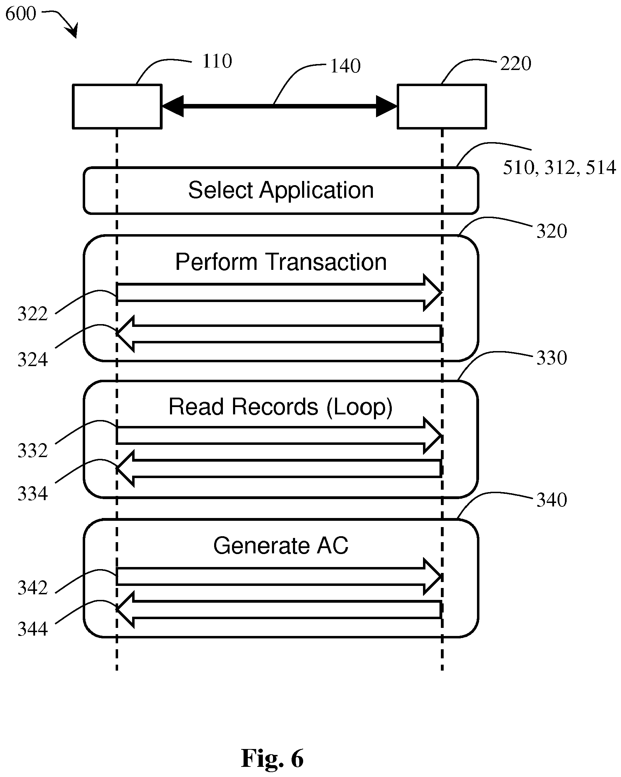

FIG. 6 depicts an ID transaction 600 between the standard POI terminal 110, which does not support non-EMV compliant transactions, and the improved ID device 220, which does support non-EMV compliant transactions. Only the standard interaction channels 140 are used.

First, the Application is selected 510 in the same way as described for FIG. 5.

However, in this improved ID transaction 500 the improved ID device 220 responds with a modified OK response 514 which indicates that non-EMV compliant transactions are supported. This may be implemented, for example, by overloading the SELECT R-APDU response with a data object identified with a proprietary BER-TLV tag to indicate that "non-EMV compliant transactions are supported" by the improved ID device 220. This data object is then followed the SW1-SW2 status word fields indicating OK with '9000'.

As the standard POI terminal 110 does not support non-EMV compliant transactions, the extra data object in the ID device WRAPPER response 514 is ignored by the standard POI terminal 110.

The rest of the improved ID transaction 600 proceeds in the same way as steps 320 to 344 as described for FIG. 3:

**510 Select Application**

| | |
|---|---|
| 312 | Select C-APDU(Mastercard AID) |
| 514 | Select R-APDU(non-EMV compliant transactions supported, SW12 = '9000') |

**320 Initiate Transaction**

| | |
|---|---|
| 322 | GetProcessingOptions C-APDU() |
| 324 | GetProcessingOptions R-APDU(file/record structure) |

**330 Read Records (Loop)**

| | |
|---|---|
| 332 | ReadRecord C-APDU(FileID/RecordID) |
| 334 | ReadRecord R-APDU(RecordContent) |

**340 Generate AC**

| | |
|---|---|
| 342 | GenerateAC C-APDU(TerminalInputData) |
| 344 | GenerateAC R-APDU(ApplicationCryptogram) |

Similarly, an ID transaction may occur between the improved POI terminal 210, which does support non-EMV compliant transactions, and the standard ID device 120, which does not support non-EMV compliant transactions. Only the standard interaction channels 140 are used, and in this case the ID transaction proceeds the same as described for FIG. 3:

**310 Select Application**

| | |
|---|---|
| 312 | Select C-APDU(Mastercard AID) |
| 314 | Select R-APDU(SW12= '9000') |

**320 Initiate Transaction**

| | |
|---|---|
| 322 | GetProcessingOptions C-APDU() |
| 324 | GetProcessingOptions R-APDU(file/record structure) |

**330 Read Records (Loop)**

| | |
|---|---|
| 332 | ReadRecord C-APDU(FileID/RecordID) |
| 334 | ReadRecord R-APDU(RecordContent) |

**340 Generate AC**

| | |
|---|---|
| 342 | GenerateAC C-APDU(TerminalInputData) |
| 344 | GenerateAC R-APDU(ApplicationCryptogram) |

In cases where the improved POI 210 interacts with the improved ID device 220, many new functionalities and new type of non-EMV compliant transaction may be initiated. For example, the improved ID device 220 may request that the ID transaction be interrupted, for example: paused or suspended, while the improved ID device 220 interacts with the consumer 130 or another electronic device.

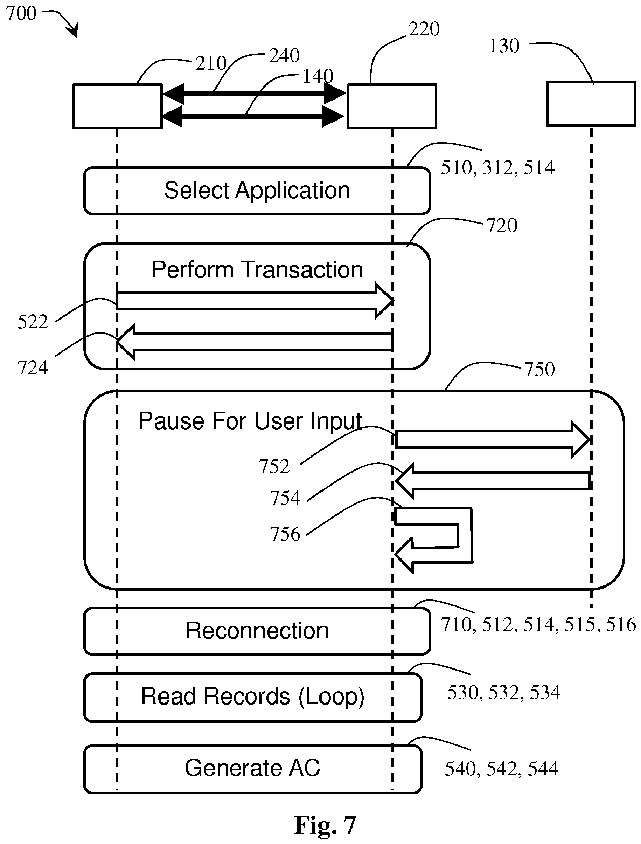

FIG. 7 depicts an improved ID transaction 700 using the improved POI 210 which supports interoperability with the improved ID device 220 using the standard interaction channels 140 and/or additional interaction channels 240 as described for FIG. 2.

First, the Application is selected 510 in the same way as described for FIG. 5, with the improved ID device similarly responding 514 that non-EMV compliant transactions are supported and ending with OK '9000'.

As the improved POI 210 also supports non-EMV compliant transactions, the processor is programmed to initiate subsequent data transactions using the WRAPPER function after the interoperability of the improved ID device 220 is detected.

The transaction is then initiated 720 by the improved POI 210 sending a request with the WRAPPER command for the processing options 522, to which the improved ID device 220 responds with the file & record structure to be retrieved 724. In addition, the WRAPPER function is used by the improved ID device 220 to indicate that the improved ID device wishes to pause the improved ID transaction 700. In this case, the improved ID device 220 appears to act as a Master, and the improved POI 210 appears to act as a Slave. The improved POI 210 waits before the ID transaction 700 is to be continued. The pause time may be arranged, for example:
- by the improved ID device 220 communicating what needs to be done; or
- by the improved POI 210 waiting a standard time and then sends the Select Command. If the ID device is still busy, it will not respond.

Once the improved ID device 220 is redetected by the improved POI 210 (event field on), the improved ID device 220 will send the improved POI 210 a request to resume the transaction (with the ISO7816-4 constraint, a "pooling" empty WRAPPER command will be sent by the improved POI 210, and the improved ID device 220 will respond back with the resume request in the signaling field of the R-APDU).

Bilateral communication is made possible between the improved ID device 220 and the improved POI 210, allowing new user cases. ISO7816 is a master-slave protocol that gives more responsibility to POI terminals to pass information to ID devices, and ID devices always act as a "slave" on every POI terminal demand. The EMV specifications implementing ISO7816 have maintained these limitations, which makes it difficult to accommodate new user cases.

In this case, the consumer 130 is requested 750 to authenticate by the improved ID device 220 and the improved ID device 220 has a data interface with appropriate authentication sensors and databases. The improved ID device 220 requests the consumer 130 to authenticate 752, the consumer 130 provides the appropriate data for authentication 754, and the improved ID device 220 confirms the correctness of the data by authenticating the consumer 130. For example:
- the improved ID device 220 may be comprised in a mobile device 224 which also comprises a physical or real keypad and a record of the consumer's 130 PIN (Personal Identification Number). When prompted 752 by the display of the mobile device 224, the consumer 130 must enter the PIN data 754 which corresponds with the record stored in the mobile device 224. If the PIN data corresponds to the record, the improved ID device authenticates 756 the consumer 130.
- the improved ID device 220 may be comprised in a mobile device 224 which also comprises a biometric sensor, such as a fingerprint sensor, and a record of the consumer's 130 fingerprint data. When prompted 752 by the display of the mobile device 224, the consumer 130 must provide biometric data 754 by activating the sensor. If the biometric data corresponds to the record, the improved ID device authenticates 756 the consumer 130.

This additional authentication step may also be done wholly or partially through any standard 140 and/or additional 240 interaction channels with a separate, possibly even remote, computing device. In some cases, it may be advantageous to authenticate directly with the improved POI 210.

The improved ID transaction 700 is continued by the improved POI 210 reconnecting with the improved ID device 220. This reconnection 710 repeats the steps made initially to Select Application 512, 514 where the improved POI 210 sends a request and the improved ID device responds 514 that non-EMV compliant transactions are supported and ends with OK '9000'.

The improved POI 210 then reads all the indicated records and ends the data exchange in the same way as described in steps 530-544 for FIG. 5:

**510 Select Application**

| | |
|---|---|
| 312 | Select C-APDU(Mastercard AID) |
| 514 | Select R-APDU(non-EMV compliant transactions supported, SW12 = '9000') |

**720 Initiate Transaction using WRAPPER command**

| | |
|---|---|
| 522 | WRAPPER C-APDU [GetProcessingOptions C-APDU] |
| 724 | WRAPPER R-APDU [(Signaling info=Request Pause), GetProcessingOptions R-APDU (file/record structure)] |
| 515 | WRAPPER C-APDU [Request for unique/random number] |
| 516 | WRAPPER R-APDU [unique/random number] |

**750 Pause For User Input**

| | |
|---|---|
| 752 | Request to authenticate |
| 754 | Provide PIN, biometric data etc. |
| 756 | User Authenticated by Mobile Device |

**710 Reconnection**

| | |
|---|---|
| 312 | Select C-APDU(Mastercard AID) |
| 514 | Select R-APDU(non-EMV compliant transactions supported, SW12 = '9000') |
| 515 | WRAPPER C-APDU [Request for unique/random number] |
| 516 | WRAPPER R-APDU [unique/random number] |

**530 Read Records (Loop) using WRAPPER command**

| | |
|---|---|
| 532 | WRAPPER C-APDU [ReadRecord C-APDU (FileID/RecordID)] |
| 534 | WRAPPER R-APDU [ReadRecord R-APDU (Record Content)] |

**540Generate AC using WRAPPER command**

| | |
|---|---|
| 542 | WRAPPER C-APDU [GenerateAC C-APDU (TerminalInputData)] |
| 544 | WRAPPER R-APDU [GenerateAC R-APDU (ApplicationCrytogram)] |

During the reconnection 710, steps may be needed when reconnecting to ensure that the same card is involved. In this example, a unique and/or random number may be exchanged 515, 516 for this transaction session. It must be shared prior to disconnecting, in order for the improved POI 210 to identify the improved ID device 220 when reconnecting.

As will be obvious to the person skilled in the art, the Pause For User Input 750 may be used for any functionality or option useful for the consumer 130 during, for example, an authentication transaction, an authorization transaction, a coupon-redeeming transaction, a payment transaction, a bidding transaction, a quoting transaction, a negotiation transaction, or any combination thereof.

For example, the improved ID device 220 may request the consumer 130 to indicate whether coupons should be redeemed. The consumer 130 provides the appropriate data so that the improved ID device 220 may decide to proceed, such as yes, no or a selection or sub-set of coupons. The improved ID device 220 may confirm the accuracy of the data provided, and recalculate the price to be paid after deducting the discount due to the coupons. Preferably, the coupon information is stored on the same mobile device as the improved ID device 220. Alternatively, the improved ID device 220 may use the standard 140 or additional interaction channels 240 to access a separate, or even remote, electronic device for data about the coupons.

With some functionalities and non-EMV compliant ID transactions, there may be more data to be exchanged than the interaction channel in use can conveniently support. For example, there is a limit to the data speed using Bluetooth, so if the improved POI 210 and/or improved ID device 220 expect a large increase in the flow of data, it would be advantageous for the consumer 130 if the devices automatically switch to a more suitable channel such as WiFi or mobile data. Similarly, Bluetooth for example, has a limited range, so if the signal is getting weaker, the devices may also automatically switch to WiFi or mobile data.

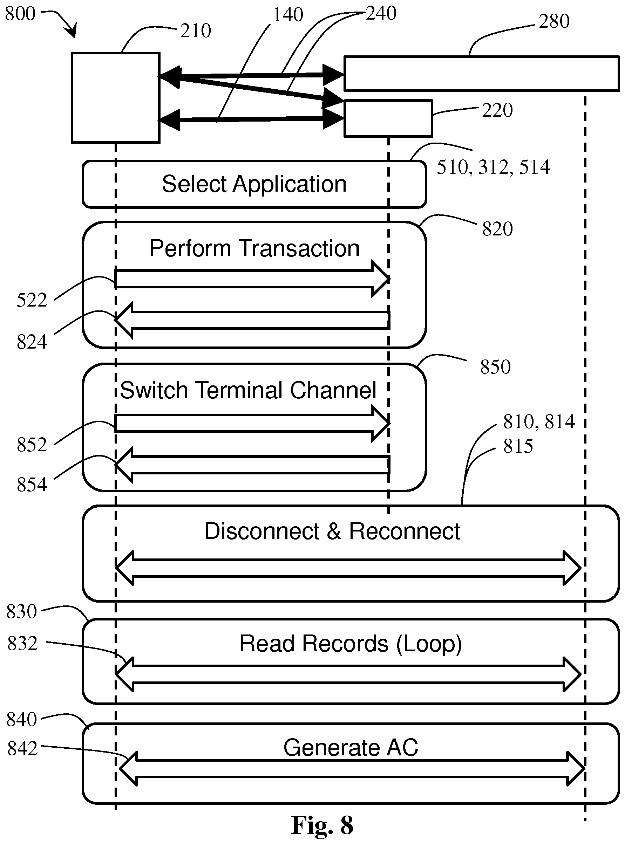

FIG. 8 depicts an improved ID transaction 800 using the improved POI 210 which supports interoperability with the improved ID device 220 using the standard interaction channels 140 and/or additional interaction channels 240 as described for FIG. 2. In addition, the improved ID device 220 is comprised within a mobile device 224 which further comprises a Communications Module 280 that may use the additional interaction channels 240. For example, the Communications Module 280 may be the WiFi or mobile data modules, allowing the mobile device 244, and also the improved ID device 220, to access the internet.

First, the Application is selected 510 in the same way as described for FIG. 5, with the improved ID device 220 similarly responding 514 that non-EMV compliant transactions are supported and ending with OK '9000'.

The transaction is then initiated 820 by the improved POI 210 sending a request using WRAPPER command for the processing options 522, to which the improved ID device 220 responds with the file & record structure to be retrieved 824. In addition, the WRAPPER function is used by the improved ID device 220 to indicate that the improved ID device wishes the improved POI 210 to provide a list of interaction channels 140, 240 that the improved POI 210 may use.

To switch the interaction channel used 850, the improved POI 210 sends a response 852 comprising the list of supported channels. In this case, the improved POI 210 appears to act as a Slave to the improved ID device 220 which appears to act as a Master. This request 852 by the improved POI is not a command.

The improved ID device 220 decides the most appropriate interaction channel 140, 240 depending on the reason for wanting to switch. The processor comprised in the improved ID device 220 is programmed to select an interaction channel supported by both the improved POI 210 and the improved ID device 220.

In this case, both the improved POI 210 and improved ID device 220 disconnect 810 the existing interaction channel, and both switch to a HTTP interaction channel, such as via mobile data or WiFi. Finally, the connection with each other is reestablished through the HTTP interaction channel.

Note that HTTP is used here as an example, as it is currently the most relevant application layer protocol when switching to wireless interaction, but any suitable channel such as XMPP or web sockets may be used.

After reconnection through HTTP 810, the improved POI 210 then reads all the indicated records 830 by sending a HTTP POST request for the record 832, to which the improved ID device 220 HTTP GET responds with the contents of that record 834. This is continued, or looped, until all the indicated records have been read. Finally, this data exchange is ended 840 by the improved POI 210 HTTP POST requesting the Application Cryptogram be generated 842, followed by the ID device 120 HTTP GET responding with the Application Cryptogram 844:

**510 Select Application**

| | |
|---|---|
| 312 | Select C-APDU(Mastercard AID) |
| 514 | Select R-APDU(non-EMV compliant transactions supported, SW12 = '9000') |

**820 Initiate Transaction using WRAPPER command**

| | |
|---|---|
| 522 | WRAPPER C-APDU [GetProcessingOptions C-APDU] |
| 824 | WRAPPER R-APDU [(Signaling info=Provide List of Supported Channels), GetProcessingOptions R-APDU (file/record structure)] |

**850 Switch Terminal Channel using WRAPPER command**

| | |
|---|---|
| 852 | WRAPPER C-APDU [List of supported channels] |
| 854 | WRAPPER R-APDU [(Signaling info=Request channel switch, HTTP Channel,HTTP parameters including URL, unique/random number] |

**810 Disconnection and Reconnection over HTTP**

| | |
|---|---|
| 814 | HTTP POST [Request for unique/random number] |
| 815 | HTTP GET [unique/random number] |

**830 HTTP (Read Records (Loop)**

| | |
|---|---|
| 832 | HTTP POST[ReadRecord C-APDU (FileID/RecordID)] |
| 834 | HTTP GET[ReadRecord R-APDU (Record Content)] |

**840 HTTP Generate AC**

| | |
|---|---|
| 842 | HTTP POST[GenerateAC C-APDU (TerminalInputData)] |
| 844 | HTTP GET[GenerateAC R-APDU (ApplicationCrytogram)] |

During the disconnection and reconnection 810, steps may be needed when reconnecting to ensure that the same card is involved. In this example, a unique and/or random number may be exchanged 814, 815 for this transaction session.

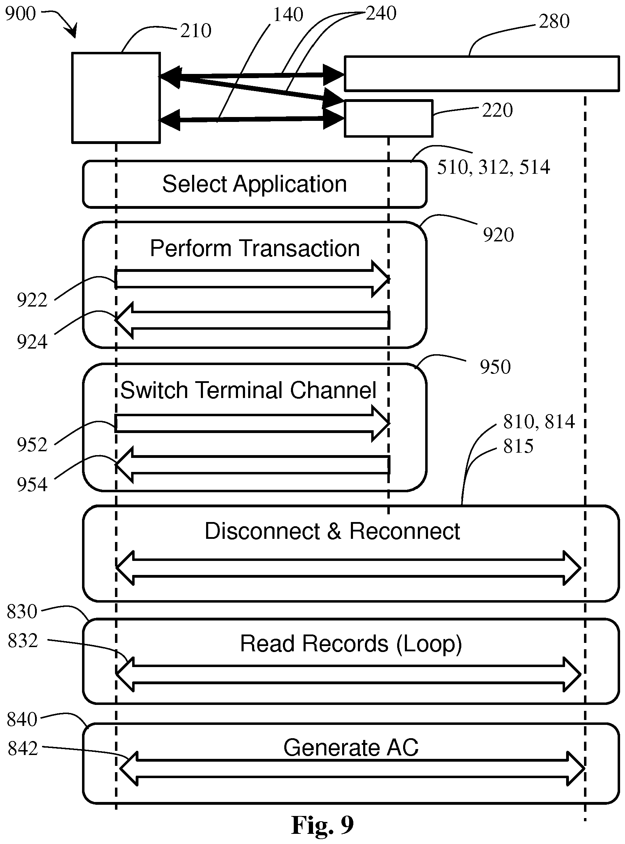

Similarly, it may be advantageous for the improved POI 210 to request the switch of interaction channel. FIG. 9 depicts an improved ID transaction 900 using the improved POI 210 which supports interoperability with the improved ID device 220 using the standard interaction channels 140 and/or additional interaction channels 240 as described for FIG. 8. In addition, the improved ID device 220 is comprised within a mobile device 224 as described for FIG. 8.

First, the Application is selected 510 in the same way as described for FIG. 5, with the improved ID device similarly responding 514 that non-EMV compliant transactions are supported and ending with OK '9000'.

The transaction is then initiated 920 by the improved POI 210 sending a request using WRAPPER command for the processing options 922, together with a request (or Command) for a list of interaction channels 140, 240 that the improved ID device 220 may use. The improved ID device 220 responds with the list of supported interaction channels, and the file & record structure to be retrieved 924.

The improved POI 210 decides the most appropriate interaction channel 140, 240 depending on the reason for wanting to switch. The processor comprised in the improved POI 210 is programmed to select an interaction channel supported by both the improved POI 210 and the improved ID device 220. To switch the interaction channel used 950, the improved POI 210 sends a WRAPPER command 952 to switch the interaction channel. In this case, the improved POI 210 appears to act as a Master and the improved ID device 220 which appears to act as a Slave. In response, the improved ID device 220 responds 954 using WRAPPER command indicating that the request to switch has been accepted.

In this case, the disconnection and reconnection 810 through HTTP is the same as described for FIG.8.

After reconnection through HTTP 910, the improved POI 210 then reads all the indicated records 830 and end the data exchange 840 as described for FIG. 8:

**510 Select Application**

| | |
|---|---|
| 312 | Select C-APDU(Mastercard AID) |
| 514 | Select R-APDU(non-EMV compliant transactions supported, SW12 = '9000') |

**920 Initiate WRAPPER Transaction using WRAPPER command**

| | |
|---|---|
| 922 | WRAPPER C-APDU [(Signaling info= Provide List of Supported Channels) (GetProcessingOptions C-APDU)] |
| 924 | WRAPPER R-APDU [(Signaling info= List of Supported Channels) |
| | GetProcessingOptions R-APDU (file/record structure)] |

**950 Switch Terminal Channel using WRAPPER command**

| | |
|---|---|
| 952 | WRAPPER C-APDU [(Signaling info=Request channel switch, HTTP Channel, HTTP parameters including URL] |
| 954 | WRAPPER R-APDU [Signaling = ACK/OK, unique/random number] |

**810 Disconnection and Reconnection over HTTP**

| | |
|---|---|
| 814 | HTTP POST [Request for unique/random number] |
| 815 | HTTP GET [unique/random number] |

**830 HTTP (Read Records (Loop)**

| | |
|---|---|
| 832 | HTTP POST[ReadRecord C-APDU (FileID/RecordID)] |
| 834 | HTTP GET[ReadRecord R-APDU (Record Content)] |

**840 HTTP Generate AC**

| | |
|---|---|
| 842 | HTTP POST[GenerateAC C-APDU (TerminalInputData)] |
| 844 | HTTP GET[GenerateAC R-APDU (ApplicationCrytogram)] |

An alternative for the WRAPPER function may be the use of the standard commands used today, but identifying each new data object required using the BER-TLV structure. However, one or more data objects may be required for each new function - in practice, it is becoming increasingly more difficult to add new data elements to be exchanged between ID devices and POI's because of the limited availability of unused tag values. The advantage of the WRAPPER function is that the signaling / proprietary information (Protocol Data) may be communicated in a format that is proprietary, and the identification of each data object does not need to be standardized beforehand, i.e. in BER-TLV structure. The WRAPPER function may be used to provide new functionalities and new non-EMV compliant data interactions, in a simple, flexible, reliable and future-proof way.

It may be advantageous if the EMV-compliant identification transactions are also ISO7816-compliant. This may provide an even higher degree of interoperability. For example, the SW1-SW2 status word fields permitted in the ISO7816-4 standard, may be used allowing ID devices to trigger sending card-originated byte strings and in some cases to demand a response from the POI terminal being interacted with. The standard prescribes the use of SW1-SW2 set to "62XX" and/or set to "64XX". However, in practice this would require updating software on all POI terminals because in the EMV specifications, "64XX" is not implemented, and "62XX" merely indicates a warning generated by an ID device in response to a command from the POI terminal.

As used herein and in the appended claims, the term "processor" should be understood to encompass a single processor or two or more processors in communication with each other.

The flow charts and descriptions thereof herein should not be understood to prescribe a fixed order of performing the method steps described therein. Rather the method steps may be performed in any order that is practicable. Similarly, the coding examples are used to explain the algorithm, and are not intended to represent the only implementations of these algorithms - the person skilled in the art will be able to conceive many different ways to achieve the same functionality as provided by the embodiments described herein.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

## Claims

1. An identification transaction method (100, 200, 300, 500, 600, 700, 800, 900) comprising:
- providing a POI terminal (110, 112, 210, 212) comprising a processor, the processor being programmed to execute identification transactions with identification devices (120, 122, 220, 222) by interaction in accordance with a standard EMV payment transaction process;
- commencing, by the POI terminal (110, 112, 210, 212), an EMV-compliant identification transaction with one of the identification devices (120, 122, 220, 222);
- receiving, by the POI terminal (110, 112, 210, 212), an indication from said one of the identification devices (120, 122, 220, 222) that the device may participate in non-EMV compliant identification transactions with the terminal (110, 112, 210, 212);
- responding to said indication by either:
(a) continuing, by the POI terminal (110, 112, 210, 212), the EMV-compliant identification transaction with said one of the identification devices (120, 122, 220, 222) if the indication is negative or no indication is received; or
(b) commencing and continuing, by the POI terminal (110, 112, 210, 212), a non-EMV compliant identification transaction with said one of the identification devices (120, 122, 220, 222) if the indication is positive.

2. The method of claim 1, wherein processor is further programmed to provide a wrapper function, configured and arranged:
- to execute only one or more EMV-compliant identification transactions with said one of the identification devices (120, 122, 220, 222) if the indication is negative or no indication is received; and
- to execute one or more EMV-compliant identification transactions and additionally one or more non-EMV compliant identification transactions with said one of the identification devices (120, 122, 220, 222) if the indication is positive.

3. The method of claim 1 or 2, wherein the one or more EMV-compliant identification transactions are also ISO7816-compliant.

4. The method of claim 1 or 2, wherein said one of the identification devices (120, 122, 220, 222) is comprised in an integrated circuit, a bio-sensor, a medical implant, a contacted card 122, a contactless card 222, a portable electronic device, a SIM module, a mobile communications device 224, a mobile computer, a remote server, or any combination thereof.

5. The method of claim 1 or 2, wherein the POI terminal (110, 112, 210, 212) is configured to interact (140, 240) with said one of the identification devices (120, 122, 220, 222) using electrical contact, close coupling, electromagnetic radiation, visible or non-visible light, NFC, RF, Bluetooth, WiFi, mobile data, LAN, USB, HTTP, HTTPS, XMPP, web sockets, FTP, or any combination thereof.

6. The method of claim 1 or 2, wherein the indication is received by the POI terminal (110, 112, 210, 212) by user interaction, electrical contact, close coupling, electromagnetic radiation, visible or non-visible light, NFC, RF, Bluetooth, WiFi, mobile data, LAN, USB, HTTP, HTTPS, XMPP, web sockets, FTP, or any combination thereof.

7. The method of claim 1 or 2, wherein the non-EMV compliant identification transaction is comprised in an authentication transaction, an authorization transaction, a coupon-redeeming transaction, a payment transaction, a bidding transaction, a quoting transaction, a negotiation transaction, or any combination thereof.

8. The method of claim 1 or 2, wherein the non-EMV compliant identification transaction is executed to switch (850, 950) the interaction channel (140, 240) used for the identification transaction.

9. The method of claim 8, wherein the request to switch (850, 950) the interaction channel (140, 240) is initiated by the identification device.

10. The method of claim 1 or 2, wherein the non-EMV compliant identification transaction pauses (420, 750) the execution of the identification instructions.

11. A POI (Point of Interface) terminal (110, 112, 210, 212) comprising a processor, the processor being programmed to execute identification transactions with identification devices (120, 122, 220, 222) by interaction (140, 240) in accordance with a standard EMV payment transaction process;
the processor being further programmed to:
- commence an EMV-compliant identification transaction with one of the identification devices (120, 122, 220, 222);
- receive an indication from said one of the identification devices (120, 122, 220, 222) that the device may participate in non-EMV compliant identification transactions with the terminal (110, 112, 210, 212);
- respond to said indication by either:
(a) continuing the EMV-compliant identification transaction with said one of the identification devices (120, 122, 220, 222) if the indication is negative or no indication is received; or
(b) commencing and continuing a non-EMV compliant identification transaction with said one of the identification devices (120, 122, 220, 222) if the indication is positive.

12. The POI terminal of claim 11, wherein processor is further programmed to provide a wrapper function, configured and arranged:
- to execute only one or more EMV-compliant identification transactions with said one of the identification devices (120, 122, 220, 222) if the indication is negative or no indication is received; and
- to execute both one or more EMV-compliant identification transactions and one or more non-EMV compliant identification transactions with said one of the identification devices (120, 122, 220, 222) if the indication is positive.

13. The POI terminal of claims 11 or 12, wherein the POI terminal (110, 112, 210, 212) is configured to interact (140, 240) with said one of the identification devices (120, 122, 220, 222) using electrical contact, close coupling, electromagnetic radiation, visible or non-visible light, NFC, RF, Bluetooth, WiFi, LAN, USB, HTTP, HTTPS, FTP, or any combination thereof.

14. The POI terminal of claims 11 or 12, wherein the POI terminal (110, 112, 210, 212) is configured to receive the indication by user interaction, electrical contact, close coupling, electromagnetic radiation, visible or non-visible light, NFC, RF, Bluetooth, WiFi, LAN, USB, HTTP, HTTPS, XMPP, web sockets, FTP, or any combination thereof.

15. An identification device (120, 122, 220, 222), comprising a processor, the processor being programmed to execute identification transactions with POI (Point of Interface) terminals (110, 112, 210, 212) by interaction in accordance with a standard EMV payment transaction process;
the processor being further programmed to:
- detect the commencing, by one of the POI terminals (110, 112, 210, 212), of an EMV-compliant identification transaction with one of the identification devices (120, 122, 220, 222);
- optionally communicate, to said one of the POI terminals (110, 112, 210, 212), an indication that the device (120, 122, 220, 222) may participate in non-EMV compliant identification transactions with the terminal (110, 112, 210, 212);
- follow the communication by either:
(a) continuing, by identification device (120, 122, 220, 222), the EMV-compliant identification transaction with said one of the POI terminals (110, 112, 210, 212) if the indication is negative or no indication is communicated; or
(b) commencing and continuing, by the identification device (120, 122, 220, 222), a non-EMV compliant identification transaction with said one of the POI terminals (110, 112, 210, 212) if the indication is positive.

16. The identification device of claim 15, wherein processor is further programmed to provide a wrapper function, configured and arranged:
- to execute only one or more EMV-compliant identification transactions with said one of the POI terminals (110, 112, 210, 212) if the indication is negative or no indication is communicated; and
- to execute both one or more EMV-compliant identification transactions and one or more non-EMV compliant identification transactions with said one of the POI terminals (110, 112, 210, 212) if the indication is positive.
